# EUROPÄISCHE PATENTANMELDUNG

(11) **EP 3 486 119 A1**
(43) Veröffentlichungstag der Anmeldung: **22.05.2019**
(21) Anmeldenummer: 18197438.7
(22) Anmeldetag: 28.09.2018
(51) Int. Cl.: B60R 5/04

(54) **VORRICHTUNG ZUR HALTERUNG EINER GEHÄUSESTRUKTUR IN EINEM FAHRZEUGINNENRAUM**

(30) Priorität: 20.11.2017 DE 102017220725
(71) Anmelder: BOS GmbH & Co. KG, 73760 Ostfildern (DE)
(72) Erfinder: Ehrenberger, Marina, 73061 Ebersbach (DE)
(74) Vertreter: Patentanwälte Ruff, Wilhelm, Beier, Dauster & Partner mbB

(57) **Zusammenfassung**

Eine Vorrichtung (1, 1a, 1b) zur Halterung einer Gehäusestruktur in einem Fahrzueginnenraum, mit einer fahrzeugseitigen Aufnahme (7 bis 7c) mit einem Gehäuseseitenteil (6 bis 6c), das in der fahrzeugseitigen Aufnahme mittels einer Arretiereinrichtung arretierbar ist, sowie mit einer Steuervorrichtung zum Lösen der Arretiereinrichtung.

Die Steuervorrichtung ist fahrzeugseitig angeordnet und mit der Arretiereinrichtung in Wirkverbindung.

Einsatz bei Laderaumabdeckungen von Personenkraftwagen

## Beschreibung

Die Erfindung betrifft eine Vorrichtung zur Halterung einer Gehäusestruktur in einem Fahrzeuginnenraum mit einer fahrzeugseitigen Aufnahme, mit einem Gehäuseseitenteil, das in der fahrzeugseitigen Aufnahme mittels einer Arretiereinrichtung arretierbar ist, sowie mit einer Steuervorrichtung zum Lösen der Arretiereinrichtung.

Eine derartige Vorrichtung zur Halterung einer Gehäusestruktur in einem Fahrzeuginnenraum ist in Form einer Laderaumabdeckung aus der DE 195 32 276 A1 bekannt. Die bekannte Laderaumabdeckung weist ein Kassettengehäuse auf, das in einem Laderaum eines Personenkraftwagens hinter einer Rückenlehne einer Fondsitzbank in Fahrzeugquerrichtung in fahrzeugfesten Aufnahmen lösbar arretierbar ist. Der Laderaum weist an seinen gegenüberliegenden Seitenwandungen jeweils eine Seitenbrüstung auf, in der jeweils eine Halteaufnahme integriert ist. In diese Halteaufnahmen ist das Kassettengehäuse einsetzbar. Zur Arretierung des Kassettengehäuses in den Halteaufnahmen weist das Kassettengehäuse im Bereich wenigstens eines Gehäuseseitenteils eine Arretiereinrichtung auf, mittels der eine Stirnseite des Gehäuseseitenteils in die entsprechende, fahrzeugfeste Halteaufnahme einrastbar ist. Zum Lösen der Arretiereinrichtung ist in dem Gehäuseseitenteil ein Betätigungsknopf vorgesehen. Durch Drücken des Betätigungsknopfs wird die Arretiereinrichtung gelöst und das Kassettengehäuse kann aus den fahrzeugfesten Halteaufnahmen entfernt werden.

Aufgabe der Erfindung ist es, eine Vorrichtung der eingangs genannten Art zu schaffen, die eine vereinfachte Bedienung ermöglicht.

Diese Aufgabe wird dadurch gelöst, dass die Steuervorrichtung fahrzeugseitig angeordnet und mit der Arretiereinrichtung in Wirkverbindung ist. Die erfindungsgemäße Lösung ermöglicht dadurch, dass die Steuervorrichtung fahrzeugseitig angeordnet ist, eine vereinfachte Bedienung für eine Bedienperson. Auch die Arretiereinrichtung ist vorteilhaft fahrzeugseitig untergebracht. Insbesondere dann, wenn die Gehäusestruktur selbst im Fahrzeuginnenraum erschwert zugänglich ist, ist dennoch eine Bedienung der Vorrichtung in einfacher Weise möglich, da zur Bedienung der Vorrichtung nicht auf die Gehäusestruktur selbst, sondern lediglich auf eine fahrzeugseitige Anordnung der Steuervorrichtung zugegriffen werden muss. Die erfindungsgemäße Vorrichtung ist in besonders vorteilhafter Weise für eine etwa horizontal ausfahrbare Laderaumabdeckung oder auch für eine etwa vertikal aufspannbare Trennvorrichtung zwischen Laderaum und Fahrgastraum vorgesehen. In gleicher Weise kann die erfindungsgemäße Vorrichtung auch für eine Beschattungsvorrichtung eines Fahrzeuginnenraums, insbesondere im Bereich eines transparenten Dachabschnitts, im Bereich einer Heckscheibe oder im Bereich von Seitenscheiben eines Kraftfahrzeugs vorgesehen sein. Als Gehäusestruktur ist vorzugsweise ein geschlossenes Kassettengehäuse vorgesehen, das mit wenigstens einem Austrittsschlitz versehen ist, durch den hindurch ein flexibles Flächengebilde aus- und einziehbar ist. Die Gehäusestruktur kann alternativ auch als offene Rahmen- oder Tragstruktur gestaltet sein. Als Steuervorrichtung kann vorteilhaft eine rein mechanische Steuervorrichtung vorgesehen sein. Es ist auch möglich, die Steuervorrichtung mit elektrischen oder elektronischen Komponenten oder mit pneumatischen Komponenten und/oder mit hydraulischen Komponenten zu versehen.

In Ausgestaltung der Erfindung ist die Steuervorrichtung als Fernsteuervorrichtung gestaltet, die ein zu der Arretiereinrichtung beabstandetes Betätigungsglied aufweist. Das Betätigungsglied ist vorzugsweise mittels eines mechanischen Fernübertragungselements mit der Arretiereinrichtung verbunden. Alternativ oder ergänzend kann auch eine elektrische oder elektronische Fernübertragung erfolgen. Die Ausgestaltung als Fernsteuervorrichtung hat den Vorteil, dass die Gehäusestruktur, insbesondere als Teil einer Laderaumabdeckung, auch bei einem sehr tiefen Laderaum aus fahrzeugseitigen Aufnahmen gelöst werden kann, ohne dass eine Bedienperson umständlich in den Laderaum hineinsteigen muss.

In weiterer Ausgestaltung der Erfindung ist die Gehäusestruktur als Kassettengehäuse einer Laderaumabdeckung gestaltet, und die fahrzeugseitige Aufnahme ist an einer Seitenbrüstung des Fahrzeuginnenraums vorgesehen. Die Seitenbrüstung ist Teil einer Seitenwandung eines Laderaums des Fahrzeuginnenraums. Vorteilhaft erstreckt sich das Kassettengehäuse in montiertem Zustand innerhalb des Laderaums in Fahrzeugquerrichtung zwischen zwei gegenüberliegenden, fahrzeugseitigen Aufnahmen, die in gegenüberliegenden Seitenbrüstungen des Laderaums vorgesehen sind.

In weiterer Ausgestaltung der Erfindung weist die Steuervorrichtung eine der Aufnahme zugeordnete Auswerfeinrichtung auf, die das Gehäuseseitenteil bei Betätigung der Steuervorrichtung in Fahrzeugquerrichtung und/oder in Fahrzeuglängsrichtung mit einem Bewegungsimpuls beaufschlagt. Der Bewegungsimpuls dient dazu, das Gehäuseseitenteil von der Aufnahme zu entfernen, vorzugsweise zur Fahrzeugmitte und/oder zu einem Fahrzeugheck hin.

In weiterer Ausgestaltung der Erfindung ist das Gehäuseseitenteil relativ zu der Gehäusestruktur in Gehäuselängsrichtung begrenzt linearbeweglich gelagert. Diese Ausgestaltung ist besonders vorteilhaft bei einem Kassettengehäuse einer Laderaumabdeckung. Wenigstens eines der beiden Gehäuseseitenteile, die ein Gehäusemittelteil des Kassettengehäuses auf gegenüberliegenden Stirnseiten flankieren und mit dem Gehäusemittelteil verbunden sind, ist in Verlängerung des Gehäusemittelteils, d.h. entlang einer Gehäuselängsachse, begrenzt linearbeweglich gelagert. Dadurch ist es möglich, durch einfaches Verschieben des wenigstens einen Gehäuseseitenteils relativ zu dem Gehäusemittelteil das Kassettengehäuse aus fahrzeugseitigen Aufnahmen zu entfernen oder in diesen zu arretieren. Hierzu ist eine Stirnseite des jeweiligen Gehäuseseitenteils derart profiliert, dass die Stirnseite des Gehäuseseitenteils formschlüssig in eine komplementäre Profilierung der jeweiligen fahrzeugseitigen Aufnahme einfügbar ist.

In weiterer Ausgestaltung der Erfindung ist in der Gehäusestruktur eine Wickelwelle drehbar gelagert, auf der ein flexibles Flächengebilde auf- und abwickelbar gehalten ist, und der Wickelwelle ist ein Federmotor zugeordnet, der die Wickelwelle in Aufwickelrichtung antreibt. Dadurch kann das flexible Flächengebilde automatisch innerhalb der Gehäusestruktur aufgewickelt werden, sobald an einem freien Stirnendbereich des Flächengebildes keine entgegengerichtete Zugkraft, insbesondere durch das Angreifen einer Bedienperson, mehr einwirkt. Der Federmotor wird auch als Wickelfeder bezeichnet.

In weiterer Ausgestaltung der Erfindung weist die fahrzeugseitige Aufnahme einen Arretierschlitten auf, der längs der Seitenbrüstung begrenzt beweglich gelagert ist. Der Arretierschlitten ist vorteilhaft in Fahrzeuglängsrichtung über einen begrenzten Verlagerungsweg beweglich. In dem Arretierschlitten ist vorzugsweise eine entsprechende Aufnahmeprofilierung vorgesehen, in der eine Stirnseite eines Gehäuseseitenteils formschlüssig aufgenommen werden kann. Durch die begrenzte Beweglichkeit des Arretierschlittens ist es möglich, nach einem Lösen der Arretiereinrichtung die Gehäusestruktur bzw. das Kassettengehäuse gemeinsam mit dem Arretierschlitten in Fahrzeuglängsrichtung zu verlagern und damit näher zu einer Bedienperson zu bringen, damit diese die Gehäusestruktur bzw. das Kassettengehäuse in einfacher Weise aus den fahrzeugseitigen Aufnahmen entnehmen kann. Falls das Kassettengehäuse bzw. die Gehäusestruktur in zwei gegenüberliegenden, fahrzeugseitigen Aufnahmen arretiert ist, kann entweder vorgesehen sein, dass lediglich eine Aufnahme mit einem Arretierschlitten versehen ist oder dass beide Aufnahmen mit jeweils einem Arretierschlitten versehen sind, so dass das Kassettengehäuse bzw. die Gehäusestruktur entweder auf einer Seite oder auf beiden Seiten in Fahrzeuglängsrichtung zu der Bedienperson hin verlagert werden kann.

In weiterer Ausgestaltung der Erfindung weist die Auswerfeinrichtung einen in der Seitenbrüstung angeordneten Auswerfer auf, der bei Betätigung auf das Gehäuseseitenteil den Bewegungsimpuls in Fahrzeugquerrichtung und/oder Fahrzeuglängsrichtung ausübt. Hierzu ist der Auswerfer vorzugsweise mit einer Antriebseinrichtung, vorzugsweise einem linearen oder rotatorischen Federantrieb, versehen, um bei einem Lösen der Arretiereinrichtung eine Aktivierung der Antriebseinrichtung zu bewirken, die zu der Ausübung des Bewegungsimpulses auf das Gehäuseseitenteil wirkt.

In weiterer Ausgestaltung der Erfindung ist der Auswerfer als in einer horizontalen Schwenkebene schwenkbeweglich gelagerte Klinkenanordnung ausgeführt. Der Klinkenanordnung ist ein Federantrieb zugeordnet, der auf die Klinkenanordnung ein Drehmoment um eine Schwenkachse der Klinkenanordnung bewirkt, das wiederum auf das Gehäuseseitenteil den gewünschten Bewegungsimpuls entweder in Fahrzeugquerrichtung oder in Fahrzeuglängsrichtung ausübt.

In weiterer Ausgestaltung der Erfindung weist das Betätigungsglied ein Greifelement auf, das manuell betätigbar ist, und das Betätigungsglied ist über ein mechanisches Fernübertragungselement mit dem Auswerfer verbunden. Als Greifelement kann eine Schlaufe, ein Ring, ein Hebel oder ein ähnliches mechanisches Element zur Ergreifung durch eine Bedienperson vorgesehen sein. Als mechanisches Fernübertragungselement ist vorzugsweise eine formstabile Übertragungsstange, ein Bowdenzug, ein Seilzug, ein Hebel oder ein ähnlich gestaltetes ein- oder mehrteiliges Bauteil vorgesehen, das Zug- und/oder Druckbelastungen aufnehmen und übertragen kann .

In weiterer Ausgestaltung der Erfindung sind an gegenüberliegenden Seitenbrüstungen des Fahrzeuginnenraums zwei zueinander komplementäre Aufnahmen mit jeweils einer Arretiereinrichtung vorgesehen, und die Steuereinrichtung weist eine Synchronisiereinrichtung zum synchronen Ansteuern beider Arretiereinrichtungen auf. Diese Ausgestaltung ist vorteilhaft, um eine Parallelverlagerung der Gehäusestruktur innerhalb des Fahrzeuginnenraums zu ermöglichen, indem beide Arretiereinrichtungen beider gegenüberliegender Aufnahmen gleichzeitig gelöst werden.

In weiterer Ausgestaltung der Erfindung ist jeweils ein Betätigungsglied im Bereich der gegenüberliegenden Seitenbrüstungen des Fahrzeuginnenraums vorgesehen, und ein mechanisches Verbindungsglied ist zum synchronen Betätigen beider Betätigungsglieder vorgesehen. Das mechanische Verbindungsglied gewährleistet, dass ein zeitgleiches Lösen beider Arretiereinrichtungen der gegenüberliegenden fahrzeugseitigen Aufnahmen erfolgt.

In weiterer Ausgestaltung der Erfindung ist als Verbindungsglied ein formstabiles Querprofil des flexiblen Flächengebildes vorgesehen. Das formstabile Querprofil ist ein Auszugprofil des Flächengebildes, das an einem in Abwickelrichtung vorderen Stirnendbereich des Flächengebildes vorgesehen ist und sich über eine gesamte Breite des Flächengebildes erstreckt. Dem Auszugprofil sind an gegenüberliegenden Stirnenden zudem Haltezapfen zugeordnet, mittels derer das Auszugprofil bei Gestaltung des Flächengebildes als Abdeckplane einer Laderaumabdeckung in fahrzeugseitigen Halterungen in einer Abdeckposition der Abdeckplane einhängbar ist.

In weiterer Ausgestaltung der Erfindung ist den beiden Aufnahmen jeweils ein in Fahrzeugquerrichtung wirksamer Auswerfer zugeordnet, und die Gehäusestruktur weist an beiden Stirnseiten jeweils ein in Gehäuselängsrichtung beweglich gelagertes Gehäuseseitenteil auf, wobei die Gehäuseseitenteile in Richtung ihrer äußeren Endstellung relativ zu einem Gehäusemittelteil federkraftbeaufschlagt sind. Die Auswerfer bewirken, dass die beiden Gehäuseseitenteile zur Fahrzeugmitte und damit zum Gehäusemittelteil hin nach innen gedrückt werden und aus den entsprechenden Halteprofilierungen der beiden Aufnahmen freikommen. Falls das mechanische Verbindungsglied als Auszugprofil des flexiblen Flächengebildes gestaltet ist und im Bereich der beiden Betätigungsglieder formschlüssig zurückgehalten ist, zieht das Drehmoment der Wickelfeder der Wickelwelle das Kassettengehäuse nach der Freigabe der Gehäuseseitenteile im Bereich der Aufnahmen zwangsläufig in Richtung des an den Betätigungsgliedern gehaltenen Auszugprofils, wodurch sich das Flächengebilde in entsprechendem Maß auf die Wickelwelle aufwickelt und das Kassettengehäuse in Fahrzeuglängsrichtung innerhalb des Fahrzeuginnenraums parallelverlagert. Das Drehmoment der als Federmotor dienenden Wickelfeder wird somit durch einfaches zeitweises Fixieren des Auszugprofils im Bereich der Betätigungsglieder dazu verwendet, das Kassettengehäuse innerhalb des Laderaums parallelzuverlagern.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch einen Ausschnitt einer Ausführungsform einer erfindungsgemäßen Vorrichtung zur Halterung einer Gehäusestruktur in einem Fahrzeuginnenraum eines Personenkraftwagens,
- Fig. 2: die Vorrichtung nach Fig. 1 in einer Lösestellung einer Arretiereinrichtung,
- Fig. 3: eine weitere Ausführungsform einer erfindungsgemäßen Vorrichtung ähnlich Fig. 1 und 2 in einer Arretierstellung einer Gehäusestruktur,
- Fig. 4: die Vorrichtung nach Fig. 3 in einer Lösestellung der Gehäusestruktur,
- Fig. 5: in vergrößerter, schematischer Darstellung eine Seitenbrüstung des Fahrzeuginnenraums für die Ausführungsform gemäß den Fig. 1 und 2 oder für die Ausführungsform gemäß den Fig. 3 und 4,
- Fig. 6 und 7: schematisch eine linke und eine rechte Seite einer weiteren Ausführungsform einer erfindungsgemäßen Vorrichtung zur Halterung einer Gehäusestruktur in einem Fahrzeuginnenraum eines Personenkraftwagens,
- Fig. 8 bis 10: in verschiedenen Funktionsstellungen einen Ausschnitt einer weiteren Ausführungsform einer erfindungsgemäßen Vorrichtung zur Halterung einer Gehäusestruktur in einem Fahrzeuginnenraum eines Personenkraftwagens,
- Fig. 11 und 12: schematisch in perspektivischer Darstellung eine Steuervorrichtung sowie eine Arretiereinrichtung einer weiteren Ausführungsform einer erfindungsgemäßen Vorrichtung zur Halterung einer Gehäusestruktur ähnlich den Fig. 8 und 10 und
- Fig. 13 sowie 14: ausschnittsweise die Funktion der Vorrichtung mit der Steuervorrichtung und der Arretiereinrichtung gemäß den Fig. 11 und 12.

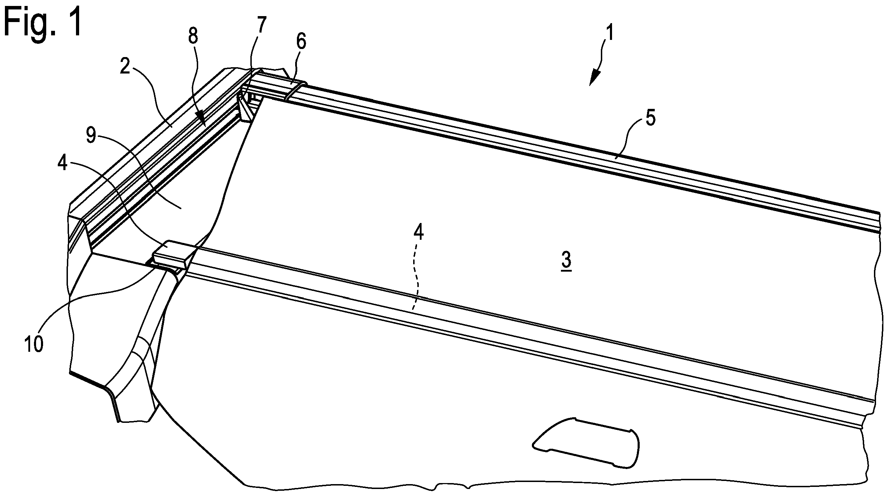

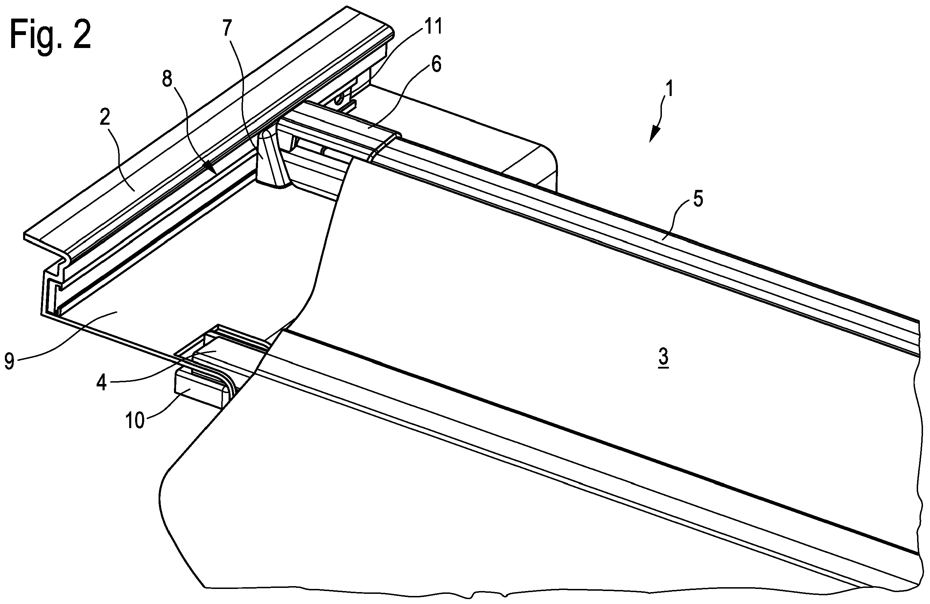

Alle anhand der Fig. 1 bis 14 dargestellten Ausführungsbeispiele betreffen eine Vorrichtung 1, 1a, 1b zur Halterung und Freigabe eines Kassettengehäuses einer Laderaumabdeckung für einen Fahrzeuginnenraum eines Personenkraftwagens. Funktions- oder baugleiche Teile und Abschnitte der unterschiedlichen Ausführungsbeispiele sind mit gleichen Bezugszeichen teilweise unter Hinzufügung von unterscheidungsfähigen Buchstaben a bis c versehen. Jede der Vorrichtungen 1 bis 1b gemäß den Fig. 1 bis 14 ist in einem Laderaum eines Personenkraftwagens vorgesehen, wobei der Laderaum in einem Heckbereich eines Fahrzeuginnenraums des Personenkraftwagens vorgesehen ist und an eine Rückenlehnenanordnung einer Fondsitzbank anschließt. Bei allen Ausführungsformen erstreckt sich das Kassettengehäuse der jeweiligen Laderaumabdeckung in montiertem Zustand in Fahrzeugquerrichtung zwischen zwei gegenüberliegenden Seitenbrüstungen 2 bis 2c. Jedes Kassettengehäuse weist ein Gehäusemittelteil 5, 5a, 5b sowie zwei Gehäuseseitenteile 6, 6a, 6b auf, die an gegenüberliegenden Stirnseiten des Gehäusemittelteils 5, 5a, 5b mit dem Gehäusemittelteil 5, 5a, 5b verbunden sind. Wenigstens eines der Gehäuseseitenteile 6, 6a, 6b ist relativ zu dem Gehäusemittelteil 5, 5a, 5b entlang einer Gehäuselängsachse, d.h. in montiertem Zustand in Fahrzeugquerrichtung, begrenzt linearbeweglich gelagert. Das linearbewegliche Gehäuseseitenteil 6, 6a, 6b ist in nicht näher dargestellter, aber grundsätzlich bekannter Weise durch eine Druckfedereinheit in Richtung einer relativ zur Mitte des Kassettengehäuses äußeren Endstellung federkraftbeaufschlagt, so dass das Gehäuseseitenteil 6, 6a, 6b ohne externe Belastung durch die Federkraftbeaufschlagung in der äußeren Endstellung an einem entsprechenden Anschlag des Gehäusemittelteils 5, 5a, 5b gehalten ist.

In montierter Funktionsstellung ist das Kassettengehäuse 5 bis 5b, 6 bis 6b in fahrzeugseitigen Aufnahmen 7 bis 7c der gegenüberliegenden Seitenbrüstungen 2 bis 2c des Laderaums arretiert, wobei das Kassettengehäuse in dieser Funktionsstellung unmittelbar hinter einer Rückenlehnenanordnung der Fondsitzbank positioniert ist.

Bei allen Ausführungsformen ist der Laderaum, in dem die entsprechende Vorrichtung 1 bis 1b gemäß den Fig. 1 bis 14 positioniert ist, von einem Fahrzeugheckzugang aus gesehen in Fahrzeuglängsrichtung relativ tief gestaltet. Um für ein Entfernen der montierten Laderaumabdeckung und damit auch des montierten Kassettengehäuses 5 bis 5b, 6 bis 6b durch eine Bedienperson eine vereinfachte Handhabung zu ermöglichen, sind die verschiedenen Ausführungsbeispiele der Vorrichtung 1 bis 1b gemäß den Fig. 1 bis 14 vorgesehen, die nachfolgend näher beschrieben werden.

Bei allen Ausführungsformen ist in dem Kassettengehäuse 5 bis 5b, 6 bis 6b eine Wickelwelle drehbar gelagert, auf der ein flexibles Flächengebilde in Form einer Abdeckplane 3, 3a auf- und abwickelbar gehalten ist. Die Abdeckplane 3, 3a tritt durch einen nicht näher bezeichneten Längsschlitz im Bereich einer Längsseite des Kassettengehäuses 5 bis 5b, 6 bis 6b aus dem Kassettengehäuse aus, um ein Aus- oder Einziehen der Abdeckplane 3, 3a zu ermöglichen. Die Wickelwelle 12, 12a, 12b ist durch eine Wickelfeder 13, 13a in Aufwickelrichtung federkraftbeaufschlagt, um die Abdeckplane 3, 3a bei Wegfall einer externen Zug- oder Haltebelastung auf die Abdeckplane 3, 3a in die aufgewickelte Ruheposition zurückzuführen, in der die Abdeckplane 3, 3a innerhalb des Kassettengehäuses 5 bis 5b, 6 bis 6b eingezogen ist.

Die Abdeckplane 3, 3a weist an ihrem in Abwickelrichtung vorderen Stirnendbereich ein formstabiles Querprofil 4, 4a auf, das auch als Auszugprofil bezeichnet wird. Das Querprofil 4 erstreckt sich über eine gesamte Breite der Abdeckplane 3 und ragt mit seinen gegenüberliegenden Stirnendbereichen über einen jeweiligen Seitenrand der Abdeckplane 3 hinaus. In Abwickelrichtung nach vorne schließt an das Querprofil 4 ein nicht näher bezeichnetes, formstabiles Konturteil an, das mit einer Griffaussparung zum Ergreifen der Abdeckplane 3 versehen ist.

Wie anhand der Fig. 1 bis 12 erkennbar ist, sind beide Seitenbrüstungen 2 bis 2c zum einen mit einer fahrzeugseitigen Aufnahme 7 bis 7c versehen, die eine Arretiereinrichtung zum formschlüssigen Sichern einer Stirnseite des jeweiligen Gehäuseseitenteils 6 bis 6b in der jeweiligen fahrzeugseitigen Aufnahme 7 bis 7c aufweisen. Zum anderen weist jede Seitenbrüstung 2 bis 2c einen etwa horizontalen Auflagebereich 9 bis 9c auf, der sich von der jeweiligen fahrzeugseitigen Aufnahme 7 bis 7c aus horizontal zu einer Fahrzeugmitte hin erstreckt. Die jeweilige Seitenbrüstung 2 ist Teil einer fahrzeugfesten Seitenverkleidung des Laderaums und damit des Fahrzeuginnenraums. Die Auflagefläche 9 bis 9c ist unmittelbar unterhalb der jeweiligen fahrzeugseitigen Aufnahme 7 bis 7c positioniert. Die jeweilige fahrzeugseitige Aufnahme 7 bis 7c ist in einem etwa vertikalen Wandabschnitt der jeweiligen Seitenbrüstung 2 bis 2c vorgesehen.

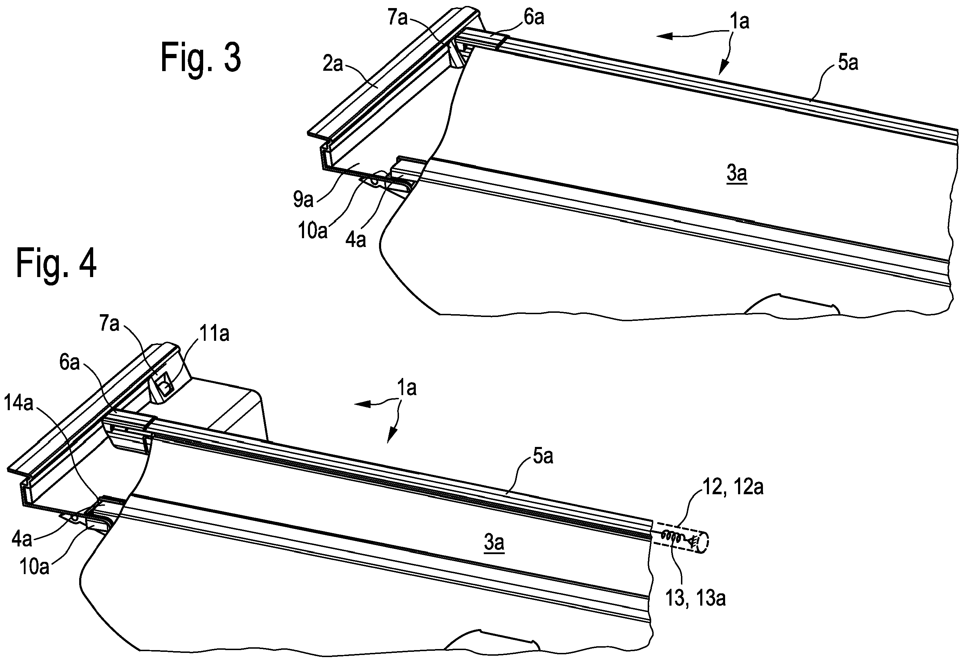

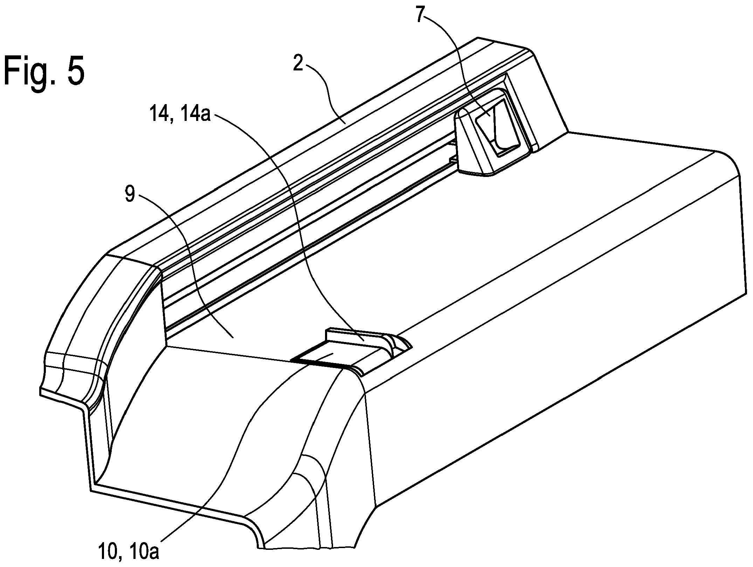

Beim Ausführungsbeispiel gemäß den Fig. 1, 2 und 5 wie auch beim Ausführungsbeispiel gemäß den Fig. 3 bis 5 ist in der etwa horizontalen Auflagefläche 9, 9a der Seitenbrüstung 2, 2a in Abstand hinter der fahrzeugseitigen Aufnahme 7, 7a - auf eine normale Fahrtrichtung des Personenkraftwagens bezogen - ein Betätigungsglied 10, 10a angeordnet. Das Betätigungsglied 10, 10a ist in der Seitenbrüstung 2, 2a fahrzeugseitig in Fahrzeughochrichtung beweglich gelagert und als Betätigungsknopf ausgebildet. Eine Lagerung zum Anheben und Absenken des Betätigungsglieds 10, 10a ist in der Seitenbrüstung 2, 2a im Bereich der Auflagefläche 9, 9a integriert. Hierzu weist die Auflagefläche 9, 9a eine entsprechende Aussparung auf, durch die hindurch das Betätigungsglied 10, 10a in einer Ruhestellung (Fig. 5) nach oben abragt. Das Betätigungsglied 10, 10a ist in Richtung seiner Ruhestellung druckfederbeaufschlagt. Die Aussparung in der Seitenbrüstung 2, 2a ist zur Fahrzeugmitte hin nach unten gezogen, um ein Nachuntendrücken des Betätigungsglieds 10, 10a durch das Querprofil 4, 4a zu ermöglichen, wie nachfolgend näher beschrieben wird. Das Betätigungsglied 10, 10a weist eine in Fahrzeugquerrichtung erstreckte und in Fahrzeughochrichtung etwa vertikal nach oben abragende Anschlagkante 14, 14a auf, die auf einer der fahrzeugseitigen Aufnahme 7, 7a zugewandten Seite einer Oberfläche des Betätigungsglieds 10, 10a positioniert ist.

Bei der Ausführungsform gemäß den Fig. 1, 2 und 5 weist die fahrzeugseitige Aufnahme 7 einen Arretierschlitten auf, der das Gehäuseseitenteil 6 in der montierten Stellung des Kassettengehäuses aufnimmt und der längs einer Führungsschiene 8 der Seitenbrüstung 2 in Fahrzeuglängsrichtung begrenzt linearbeweglich verschiebbar ist. Der Arretierschlitten 7 wird durch einen in der Führungsschiene 8 der Seitenbrüstung 2 integrierten Sicherungsbolzen 11 in seiner arretierten Ruhestellung (Fig. 1) gehalten. Der Sicherungsbolzen 11 ist Teil einer Arretiereinrichtung und ist mittels einer Fernsteuervorrichtung mit dem Betätigungsglied 10, 10a in Wirkverbindung, wobei die Fernsteuervorrichtung nicht näher dargestellt ist. Die Fernsteuervorrichtung ist als mechanische Fernsteuervorrichtung ausgeführt.

Auf den Arretierschlitten der fahrzeugseitigen Aufnahme 7 wirkt in Fahrzeuglängsrichtung eine Federkraft, die bei Lösen des Arretierschlittens durch entsprechendes Lösen des Sicherungsbolzens 11 dazu führt, dass der Arretierschlitten der fahrzeugseitigen Aufnahme 7 durch die entsprechende Federkraft in Fahrzeuglängsrichtung zu einem Fahrzeugheck hin nach hinten verlagert wird. Dabei sind die gegenüberliegenden fahrzeugseitigen Aufnahmen 7 der gegenüberliegenden Seitenbrüstungen 2 des Laderaums identisch zueinander ausgeführt, so dass auch der nicht dargestellte, gegenüberliegende Arretierschlitten in gleicher Weise freigegeben und durch Federkraft zum Fahrzeugheck hin nach hinten verlagert wird. Die Federkraft, die die Arretierschlitten und das Kassettengehäuse 5, 6 in Fahrzeuglängsrichtung nach hinten zieht, wird in einfacher Weise durch die Wickelfeder 13, 13a der Wickelwelle 12, 12a innerhalb des Kassettengehäuses 5, 6 aufgebaut. Denn dadurch, dass das Querprofil 4 auf beiden Seiten an den Anschlagkanten 14 der Betätigungsglieder 10 in den Auflageflächen 9 der jeweiligen Seitenbrüstung 2 in Fahrzeuglängsrichtung nach vorne blockiert ist, übt das in Aufwickelrichtung wirkende Drehmoment der Wickelfeder 13 auf die Arretierschlitten und das Kassettengehäuse 5, 6 nach Freigabe der Arretierschlitten durch Lösen der Sicherungsbolzen 11 zwangsläufig eine zum Fahrzeugheck wirkende Zugkraft aus, um die Abdeckplane 3 auf die Wickelwelle aufzuwickeln. Dadurch wird das Kassettengehäuse 5, 6 quasi selbsttätig gegen das blockierte Querprofil 4 herangezogen.

Da das Querprofil 4 formstabil gestaltet ist und bei einer Anlage des Querprofils an den Anschlagkanten 14 beider Betätigungsglieder 10 in deren Ruhestellung durch ein manuelles Nachuntendrücken des Querprofils 4 durch eine Bedienperson beide Betätigungsglieder 10 der gegenüberliegenden Seitenbrüstungen 2 zeitgleich, simultan und synchron betätigt, werden beide Sicherungsbolzen 11 der gegenüberliegenden fahrzeugseitigen Aufnahmen 7 zeitgleich gelöst, so dass die beiden Arretierschlitten synchron zueinander gemeinsam mit dem Kassettengehäuse 5, 6 nach hinten gezogen werden. Dabei wird das Kassettengehäuse 5, 6 längs der Auflageflächen 9 der gegenüberliegenden Seitenbrüstungen 2 parallel zum Fahrzeugheck hin nach hinten verlagert. Im Bereich der stegförmigen Anschlagkonturen 14 kommt das Kassettengehäuse 5, 6 zur Ruhe und kann dann in einfacher Weise nach oben aus entsprechenden Aufnahmeprofilierungen der Arretierschlitten der fahrzeugseitigen Aufnahmen 7 entnommen werden.

Die Ausführungsform gemäß den Fig. 3 und 4 entspricht im Wesentlichen der zuvor beschriebenen Ausführungsform gemäß den Fig. 1, 2 und 5. Wesentlicher Unterschied bei der Vorrichtung 1a gemäß den Fig. 3 und 4 ist es, dass die fahrzeugseitige Aufnahme 7a fahrzeugfest in der jeweiligen Seitenbrüstung 2a angeordnet ist. Der jeweiligen fahrzeugseitigen Aufnahme 7a ist eine Auswerfeinrichtung mit einem Auswerfer 11a zugeordnet, der über die Fernsteuervorrichtung und das Betätigungsglied 10a betätigt wird. Bei der Ausführungsform gemäß den Fig. 3 und 4 sind beide gegenüberliegenden Gehäuseseitenteile 6a gegen Federkraft begrenzt linearbeweglich gelagert. Die beiden Auswerfer 11a drücken bei entsprechender Belastung durch die Fernsteuervorrichtung in einfacher Weise die beiden Gehäuseseitenteile 6a zur Fahrzeugmitte und damit zum Gehäusemittelteil 5a hin nach innen, wodurch entsprechend stirnseitige Profilierungen der Gehäuseseitenteile 6a aus komplementären Aufnahmeprofilierungen der fahrzeugseitigen Aufnahmen 7a freikommen. Anschließend können die Gehäuseseitenteile 6a in gleicher Weise auf der jeweiligen Auflagefläche 9a der jeweiligen Seitenbrüstung 2a in Richtung der Anschlagkanten 14a entlanggleiten, an denen von der gegenüberliegenden Seite her der jeweilige Stirnendbereich des Querprofils 4a abgestützt ist. Die Fernsteuervorrichtung ist mechanisch ausgestaltet und schafft eine Wirkverbindung zwischen dem Betätigungsglied 10a und dem in Fahrzeugquerrichtung beweglich gelagerten Auswerfer 11a in jeder fahrzeugseitigen Aufnahme 7a. Die synchrone und damit zeitgleiche und simultane Auslösung der Auswerfer 11a durch die Betätigungsglieder 10a erfolgt in gleicher Weise durch die Stirnendbereiche des Querprofils 4a, wie dies bei der Ausführungsform gemäß den Fig. 1, 2 und 5 bereits beschrieben wurde. Um ein hindernisfreies Entlanggleiten der Gehäuseseitenteile 6a auf den Auflageflächen 9a der Seitenbrüstungen 2a ermöglichen zu können, springt die fahrzeugfeste Aufnahme 7a gegenüber einem zum Fahrzeugheck hin anschließenden Wandungsabschnitt der Seitenbrüstung 2a zur Fahrzeugmitte hin nach innen vor. Denn die Gehäuseseitenteile 6a werden durch die Auswerfer 11a bei entsprechender Betätigung zur Mitte des Gehäusemittelteils 5a hin nach innen gedrückt, bis die Gehäuseseitenteile 6a von den fahrzeugseitigen Aufnahmen 7a freikommen. Anschließend wird das Kassettengehäuse durch die Rückholkraft der Wickelfeder zum Fahrzeugheck hin gezogen, wobei zwangsläufig die Gehäuseseitenteile 6a wieder in ihre äußere Endstellung gedrückt werden. Um zu vermeiden, dass die Gehäuseseitenteile 6a sich hierbei an den vertikalen Wandungsabschnitten der Seitenbrüstungen 2a verklemmen, ist der Abstand der gegenüberliegenden vertikalen Wandungsabschnitte, die sich an die fahrzeugseitigen Aufnahmen 7a zum Fahrzeugheck hin nach hinten anschließen, zueinander größer als die Länge des Kassettengehäuses in der äußeren Endstellung der Gehäuseseitenteile 6a.

Das Kassettengehäuse 5a, 6a kommt an den Anschlagstegen 14a in gleicher Weise zur Ruhe, sobald die Abdeckplane 3a vollständig aufgewickelt ist und das Querprofil 4a zumindest im Wesentlichen im Bereich des Längsschlitzes des Kassettengehäuses 5a, 6a an der entsprechenden Längsseite des Kassettengehäuses 5a, 6a anliegt. Nun kann das Kassettengehäuse einschließlich der Abdeckplane, des Querprofils und des Konturteils in einfacher Weise von Hand nach oben entnommen und aus dem Fahrzeug entfernt werden.

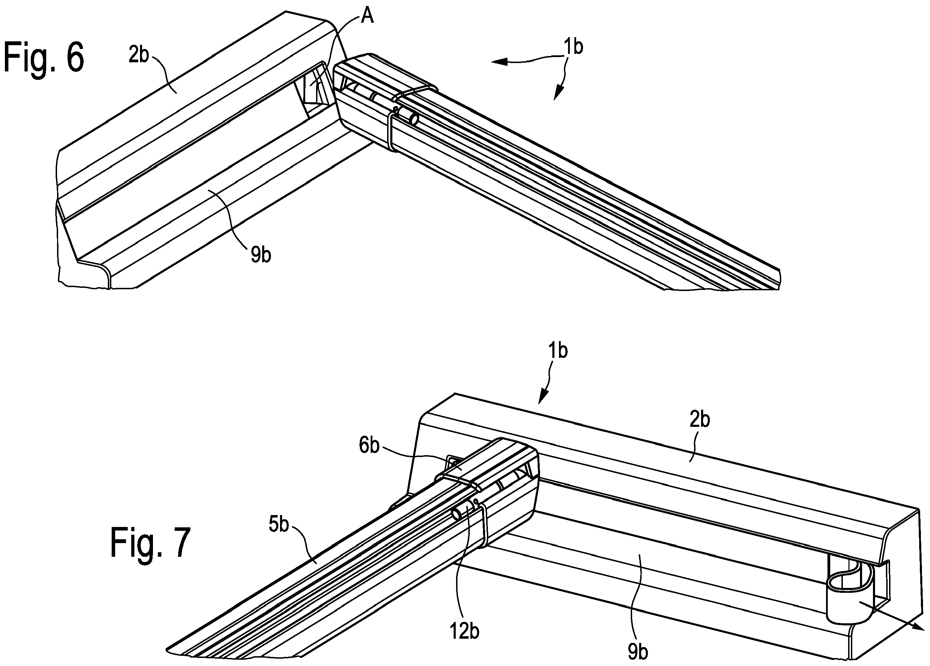

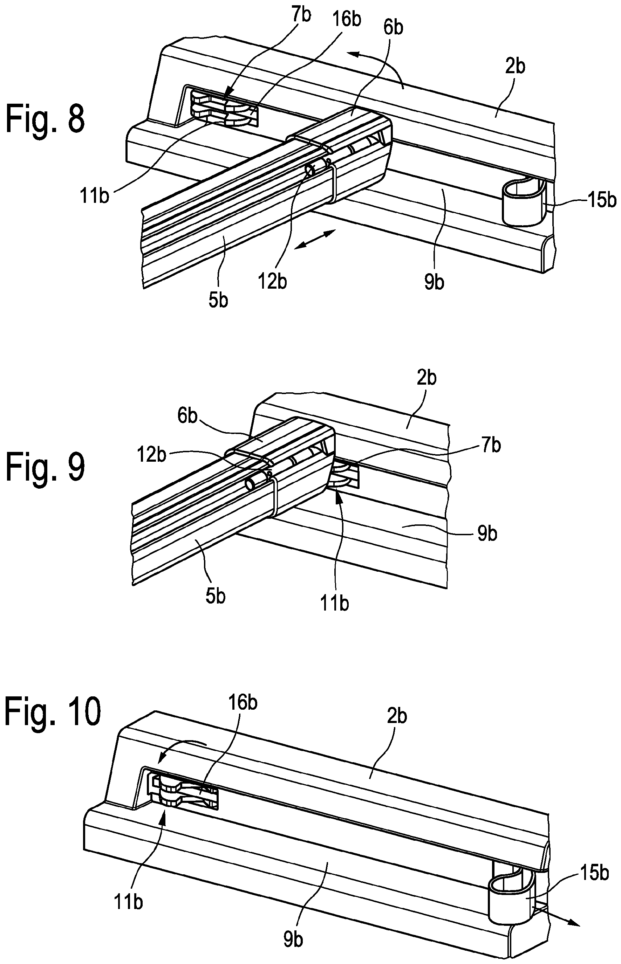

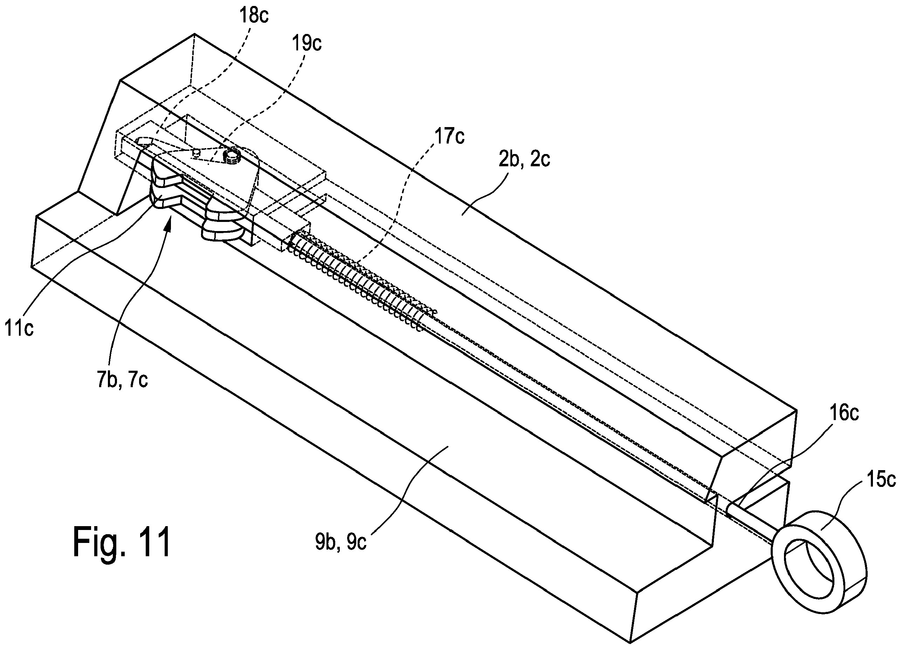

Bei der Ausführungsform gemäß den Fig. 6 bis 10 ist die Vorrichtung 1b unterschiedlich gestaltet zu den Ausführungsformen gemäß den Fig. 1 bis 5. Bei dieser Ausführungsform wird das Kassettengehäuse 5b, 6b auf einer Seite - vorliegend im Bereich einer linken Seitenbrüstung 2b - in eine fahrzeugseitige Aufnahme A eingesetzt, indem das Gehäuseseitenteil 6b stirnseitig in Fahrzeugquerrichtung in die fahrzeugseitige Aufnahme A eingefügt wird. Anschließend wird das Kassettengehäuse 5b, 6b im Bereich des gegenüberliegenden Seitenteils 6b horizontal in die gegenüberliegende, fahrzeugseitige Aufnahme 7b eingeschwenkt. Hierzu weist die gegenüberliegende Seitenbrüstung 2b eine etwa horizontal nach innen abragende Auflagefläche 9b auf. Das der Aufnahme 7b zugeordnete Gehäuseseitenteil 6b ist analog der zuvor beschriebenen Ausführungsformen in Gehäuselängsrichtung begrenzt linearbeweglich gelagert und in Richtung der äußeren Endstellung federkraftbeaufschlagt. Die fahrzeugseitige Aufnahme 7b weist zur formschlüssigen Aufnahme einer entsprechenden stirnseitigen Halteprofilierung des Gehäuseseitenteils 6b eine Klinkenanordnung 11b auf. Sowohl die stirnseitige Halteprofilierung des Gehäuseseitenteils 6b als auch die Konturierung der Klinkenanordnung 11b zur Bildung entsprechender Aufnahmeprofilierungen für die Halteprofilierung des Gehäuseseitenteils 6c sind analog der Ausführungsform gemäß den Fig. 11 bis 14 ausgeführt, so dass zur weiteren Erläuterung ergänzend auf die Fig. 11 bis 14 verwiesen wird. Die Klinkenanordnung 11b ist in einer in Fig. 8 gezeigten Aufnahmestellung der Aufnahme 7b mittels einer nachfolgend näher beschriebenen Arretiereinrichtung blockiert. Ein Einrasten der stirnseitigen Halteprofilierung 21c des Gehäuseseitenteils 6c erfolgt somit durch ein Einschwenken in Pfeilrichtung gemäß Fig. 8 nach vorne, wobei das Gehäuseseitenteil 6b beim Vorbeigleiten an Außenkonturen der Klinkenanordnung 11b zur Fahrzeugmitte hin zurückweicht, bis die Halteprofilierung 21c zwischen den Aufnahmeprofilierungen der Klinkenanordnung 11b, 11c gefangen ist.

Zum Lösen der Arretiereinrichtung der Klinkenanordnung 11b ist eine Fernsteuervorrichtung vorgesehen, die ein Zugband 16b aufweist, das als Fernübertragungselement dient. Das Zugband 16b der Fernsteuervorrichtung mündet in ein als Schlaufe gestaltetes Greifelement 15b, das in Abstand hinter der fahrzeugseitigen Aufnahme 7b zur Fahrzeugmitte hin aus der Seitenbrüstung 2b herausragt. Die Fernsteuervorrichtung einschließlich des Zugbands 16b erstreckt sich hinter einem nicht näher bezeichneten, vertikalen Wandungsabschnitt der Seitenbrüstung 2b und ist demzufolge durch die Seitenbrüstung 2b verdeckt. Sobald eine Bedienperson in der Arretierstellung des Kassettengehäuses 5b, 6b (Fig. 9) an dem als Schlaufe gestalteten Greifelement 15b in Pfeilrichtung gemäß Fig. 10 nach hinten zieht, wird die in Richtung ihrer Arretierstellung drehmomentbeaufschlagte Klinkenanordnung 11b in einer Horizontalebene verschwenkt, wodurch ein - in Fahrzeuglängsrichtung gesehen - vorderer Klinkenabschnitt der Klinkenanordnung 11b zur Fahrzeugmitte hin nach innen schwenkt, während ein hinterer Klinkenabschnitt der Klinkenanordnung 11b in die Seitenbrüstung 2b hineinschwenkt und so das Gehäuseseitenteil 6b freigibt. Der vordere Klinkenabschnitt der Klinkenanordnung 11b übt auf die Halteprofilierung 21c des Gehäuseseitenteils 6b einen Bewegungsimpuls zum Fahrzeugheck hin nach hinten aus, wodurch das Gehäuseseitenteil 6b wieder bis etwa in die Stellung gemäß Fig. 8 nach hinten auf der Auflagefläche 9b verschoben wird. Dadurch kann die entsprechende rechte Hälfte des Kassettengehäuses von einer Bedienperson einfach ergriffen werden. Die Bedienperson zieht das Kassettengehäuse im Bereich des gegenüberliegenden Gehäuseseitenteils aus der gegenüberliegenden fahrzeugseitigen Aufnahme A heraus und kann nun das Kassettengehäuse einschließlich Abdeckplane, Querprofil und Konturteil aus dem Fahrzeug entfernen.

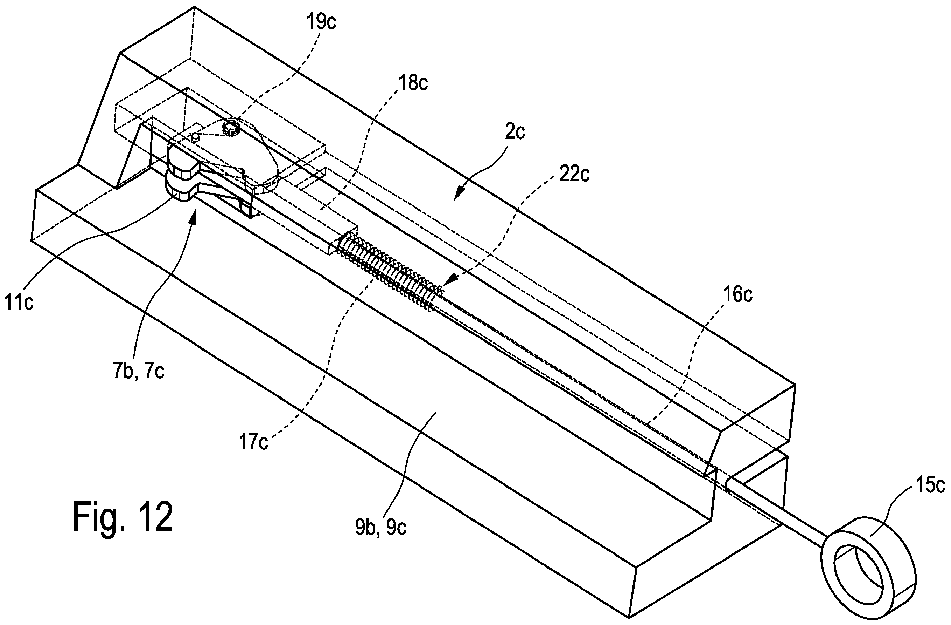

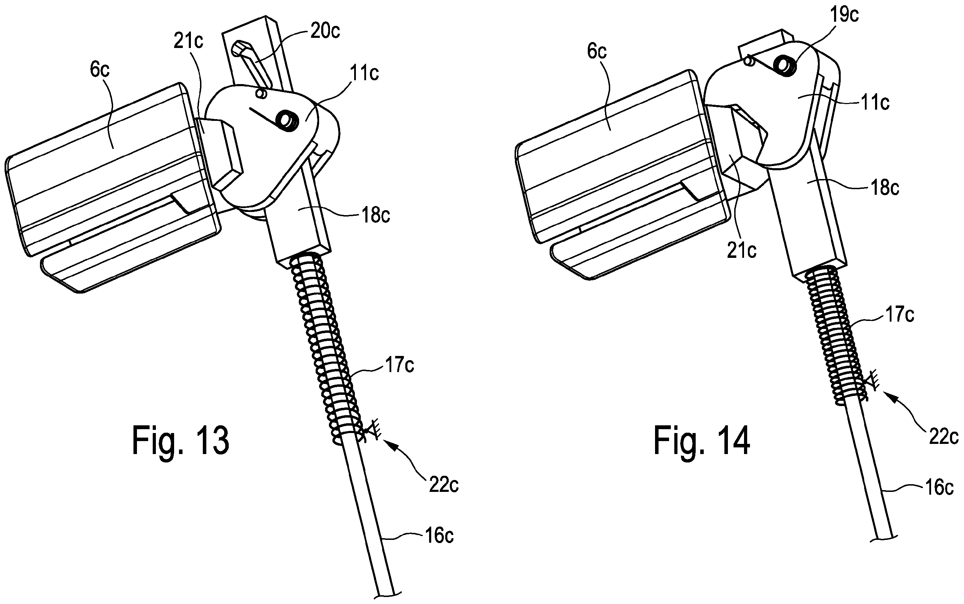

Die Funktionsweise bei der Ausführungsform gemäß den Fig. 11 bis 14 ist zumindest weitgehend identisch zu der Ausführungsform gemäß den Fig. 6 bis 10. Aus diesem Grund haben entsprechende schematische Darstellungen in den Fig. 11 und 12 ergänzend auch die Bezugszeichen der Ausführungsform gemäß den Fig. 6 bis 10. Zur Vermeidung von Wiederholungen wird nachfolgend lediglich auf die Unterschiede der Ausführungsform gemäß den Fig. 11 bis 14 eingegangen. Auch bei der Ausführungsform gemäß den Fig. 11 bis 14 wird das Kassettengehäuse auf einer Seite analog der Darstellung gemäß Fig. 6 gelagert. Die gegenüberliegende Lagerung entspricht den Darstellungen gemäß den Fig. 11 bis 14. Wesentlicher Unterschied zu der Ausführungsform gemäß den Fig. 6 bis 10 ist es, dass die Fernsteuervorrichtung zur Fernübertragung kein reines Zugmittel wie das Zugband 16b gemäß Fig. 6 bis 10, sondern vielmehr ein formstabiles Zug-/Druckmittel, vorliegend in Form einer Fernübertragungsstange 16c, aufweist. Zudem ist ein entsprechendes Greifelement 15c in Form eines Rings gestaltet, der stirnseitig an der Fernübertragungsstange 16c befestigt ist und in Fahrzeuglängsrichtung nach hinten aus der Seitenbrüstung 2c herausragt. Bei der Ausführungsform gemäß den Fig. 6 bis 10 ragt das als Schlaufe gestaltete Greifelement 15b zur Mitte hin aus der Seitenbrüstung 2b heraus. Die Fernübertragungsstange 16c ist in Fahrzeuglängsrichtung nach vorne mit einem Steuerschlitten 18c der Fernsteuervorrichtung verbunden, der mit der Klinkenanordnung 11c in steuernder Wirkverbindung ist. Die Klinkenanordnung 11c ist - wie bei der Ausführungsform gemäß den Fig. 6 bis 10 - um eine in Fahrzeughochrichtung erstreckte Schwenkachse in der Seitenbrüstung 2c schwenkbeweglich gelagert, wodurch sich die etwa horizontale Schwenkebene der Klinkenanordnung 11c ergibt. Die Klinkenanordnung 11c ist bezüglich ihrer Aufnahmeprofilierungen sowie der vorderen und hinteren Klinkenabschnitte identisch gestaltet zu der Ausführungsform gemäß den Fig. 6 bis 10. Der Steuerschlitten 18c ragt in Fahrzeuglängsrichtung durch die Klinkenanordnung 11c hindurch, deren Schwenkachse in Fahrzeugquerrichtung außenseitig benachbart zu dem Steuerschlitten 18c positioniert ist. Der Steuerschlitten 18c ist einschließlich der Fernübertragungsstange 16c in Fahrzeuglängsrichtung in der Seitenbrüstung 2c linearbeweglich gelagert. Der Steuerschlitten 18c weist eine Steuerkurve 20c auf, die als Kulissenführung gestaltet ist. Die Klinkenanordnung 11c ist mit einem in die Steuerkurve 20c hineinragenden Kulissenzapfen versehen, der anhand der Fig. 13 und 14 erkennbar ist, aber nicht näher bezeichnet ist. Die Steuerkurve 20c definiert gemeinsam mit dem Kulissenzapfen eine Zwangsführung der Klinkenanordnung 11c, sobald der Steuerschlitten 18c und die Fernübertragungsstange 16c in Fahrzeuglängsrichtung verlagert werden. Dem Steuerschlitten 18c und der Fernübertragungsstange 16c ist eine Rückstellfeder 17c zugeordnet, die sich an einem brüstungsseitigen Anschlag 22c einerseits und an dem Steuerschlitten 18c andererseits abstützt und den Steuerschlitten 18c und die Fernübertragungsstange 16c in einer Ruhestellung gemäß Fig. 13 sichert. Sobald an dem Greifelement 15c manuell zum Fahrzeugheck hin gezogen wird, bewegt sich der Steuerschlitten 18c gegen die Rückstellkraft der als Schraubendruckfeder gestalteten Rückstellfeder 17c nach hinten, wodurch die Klinkenanordnung 11c gemäß den Fig. 13 und 14 im Gegenuhrzeigersinn verschwenkt. Dabei übt der vordere Klinkenabschnitt der Klinkenanordnung 11c auf die Halteprofilierung 21c des Gehäuseseitenteils 6c einen Bewegungsimpuls in Fahrzeuglängsrichtung nach hinten aus, wodurch das Gehäuseseitenteil 6c zum Fahrzeugheck hin auf der Auflagefläche 9b, 9c der Seitenbrüstung 2b, 2c entlanggleitet. Die Stärke des Bewegungsimpulses wird von der Geschwindigkeit des manuellen Ziehens des Greifelements 15 bestimmt. Die Bedienperson kann daher bei einem schnellen und kräftigen Ziehen an dem Greifelement 15c einen längeren Gleitweg auf der Auflagefläche 9b, 9c des Gehäuseseitenteils 6c erzielen als bei einem schwachen und langsamen Ziehen an dem Greifelement 15c.

## Patentansprüche

1. Vorrichtung (1, 1a, 1b) zur Halterung einer Gehäusestruktur in einem Fahrzeuginnenraum mit einer fahrzeugseitigen Aufnahme (7 bis 7c), mit einem Gehäuseseitenteil (6 bis 6c), das in der fahrzeugseitigen Aufnahme (7 bis 7c) mittels einer Arretiereinrichtung arretierbar ist, sowie mit einer Steuervorrichtung zum Lösen der Arretiereinrichtung, **dadurch gekennzeichnet, dass** die Steuervorrichtung fahrzeugseitig angeordnet und mit der Arretiereinrichtung in Wirkverbindung ist.

2. Vorrichtung nach Anspruch 1, **dadurch gekennzeichnet, dass** die Steuervorrichtung als Fernsteuervorrichtung gestaltet ist, die ein zu der Arretiereinrichtung beabstandetes Betätigungsglied (10, 10a; 15b, 15c) aufweist.

3. Vorrichtung nach einem der vorhergehenden Ansprüche, **dadurch gekennzeichnet, dass** die Gehäusestruktur als Kassettengehäuse einer Laderaumabdeckung gestaltet ist, und dass die fahrzeugseitige Aufnahme (7 bis 7c) an einer Seitenbrüstung (2 bis 2c) des Fahrzeuginnenraumes vorgesehen ist.

4. Vorrichtung nach einem der vorhergehenden Ansprüche, **dadurch gekennzeichnet, dass** die Steuervorrichtung eine der Aufnahme (7 bis 7c) zugeordnete Auswerfeinrichtung aufweist, die das Gehäuseseitenteil (6 bis 6c) bei Betätigung der Steuervorrichtung in Fahrzeugquerrichtung und/oder in Fahrzeuglängsrichtung mit einem Bewegungsimpuls beaufschlagt.

5. Vorrichtung nach einem der vorhergehenden Ansprüche, **dadurch gekennzeichnet, dass** das Gehäuseseitenteil (6 bis 6c) relativ zu der Gehäusestruktur in Gehäuselängsrichtung begrenzt linearbeweglich gelagert ist.

6. Vorrichtung nach einem der vorhergehenden Ansprüche, **dadurch gekennzeichnet, dass** in der Gehäusestruktur eine Wickelwelle (12, 12a) drehbar gelagert ist, auf der ein flexibles Flächengebilde (3, 3a) auf- und abwickelbar gehalten ist, und dass der Wickelwelle (12, 12a) ein Federmotor (13, 13a) zugeordnet ist, der die Wickelwelle in Aufwickelrichtung antreibt.

7. Vorrichtung nach einem der vorhergehenden Ansprüche, **dadurch gekennzeichnet, dass** die fahrzeugseitige Aufnahme (7) einen Arretierschlitten aufweist, der längs der Seitenbrüstung (2) begrenzt beweglich gelagert ist.

8. Vorrichtung nach einem der vorhergehenden Ansprüche, **dadurch gekennzeichnet, dass** die Auswerfeinrichtung einen in der Seitenbrüstung (2a, 2b, 2c) angeordneten Auswerfer (11a, 11b, 11c) aufweist, der bei Betätigung auf das Gehäuseseitenteil den Bewegungsimpuls in Fahrzeugquerrichtung und/oder Fahrzeuglängsrichtung ausübt.

9. Vorrichtung nach Anspruch 8, **dadurch gekennzeichnet, dass** der Auswerfer als in einer horizontalen Schwenkebene schwenkbeweglich gelagerte Klinkenanordnung (11b, 11c) ausgeführt ist.

10. Vorrichtung nach einem der vorhergehenden Ansprüche, **dadurch gekennzeichnet, dass** das Betätigungsglied ein Greifelement (15b, 15c) aufweist, das manuell betätigbar ist, und dass das Betätigungsglied (15b, 15c) über ein mechanisches Fernübertragungselement (16b, 16c) mit dem Auswerfer verbunden ist.

11. Vorrichtung nach einem der vorhergehenden Ansprüche, **dadurch gekennzeichnet, dass** an gegenüberliegenden Seitenbrüstungen (2, 2a) des Fahrzeuginnenraums (2) zueinander komplementäre Aufnahmen (7, 7a) mit jeweils einer Arretiereinrichtung vorgesehen sind, und dass die Steuervorrichtung eine Synchronisiereinrichtung zum synchronen Ansteuern beider Arretiereinrichtungen aufweist.

12. Vorrichtung nach Anspruch 11, **dadurch gekennzeichnet, dass** jeweils ein Betätigungsglied (10, 10a) im Bereich der gegenüberliegenden Seitenbrüstungen (2, 2a) des Fahrzeuginnenraums vorgesehen ist, und dass ein mechanisches Verbindungsglied zum synchronen Betätigen beider Betätigungsglieder (10, 10a) vorgesehen ist.

13. Vorrichtung nach Anspruch 12, **dadurch gekennzeichnet, dass** als Verbindungsglied ein formstabiles Querprofil (4, 4a) des flexiblen Flächengebildes (3, 3a) vorgesehen ist.

14. Vorrichtung nach einem der Ansprüche 11 bis 13, **dadurch gekennzeichnet, dass** den beiden Aufnahmen (2, 2a) jeweils ein in Fahrzeugquerrichtung wirksamer Auswerfer zugeordnet ist, und dass die Gehäusestruktur an beiden Stirnseiten jeweils ein in Gehäuselängsrichtung beweglich gelagertes Gehäuseseitenteil (6, 6a) aufweist, wobei die Gehäuseseitenteile (6, 6a) in Richtung ihrer äußeren Endstellung relativ zu einem Gehäusemittelteil (5, 5a) federkraftbeaufschlagt sind.
